# FASCICULE DE BREVET EUROPEEN

(11) **EP 2 997 097 B1**
(45) Date de publication et mention de la délivrance du brevet: **25.01.2017**
(21) Numéro de dépôt: 14729414.4
(22) Date de dépôt: 12.05.2014
(51) Int. Cl.: C09D 11/037, C09D 11/50, B41M 3/14

(54) **COMPOSITION D'ENCRE THERMOCHROMIQUE**
THERMOCHROME TINTENZUSAMMENSETZUNG
THERMOCHROMIC INK COMPOSITION

(30) Priorité: 13.05.2013 FR 1354254
(43) Date de publication de la demande: 23.03.2016
(60) Demande divisionnaire: 16157216.9
(73) Titulaire: FASVER, 34670 Baillargues (FR)
(72) Inventeur: PHILIPPE, Eric, F-13430 Eyguieres (FR); BES, Laurence, F-34830 Jacou (FR)
(74) Mandataire: Cabinet BARRE LAFORGUE & associés
(86) Numéro de dépôt international: PCT/FR2014/051099
(87) Numéro de publication internationale: WO 2014/184482

(56) Documents cités:
- EP-A1- 1 095 996
- DE-A1-102006 016 048
- GB-A- 2 197 109
- JP-A- 2002 129 029
- US-A1- 2005 257 880
- US-B1- 6 413 305

## Description

L'invention concerne une composition d'encre thermochromique plus particulièrement destinée aux cartes formées d'une pluralité de couches en au moins un matériau polymérique -notamment en polycarbonate-laminées à chaud et sous pression, aux papiers synthétiques et aux papiers fiduciaires.

EP 0400220 décrit un article laminé à des fins d'identification (tel qu'une carte d'identité) comprenant deux feuilles ou couches de PVC dont l'une au moins est transparente, entre lesquelles est laminée une couche contenant des cristaux liquides thermochromiques disposés sur un fond contrasté foncé. Ces cristaux liquides sont appliqués sous forme d'une encre à base aqueuse contenant un liant hydrosoluble polymérique, par exemple la gélatine ou un polyacrylamide. Comme l'indique ce document, la lamination à chaud et sous pression des feuilles de PVC portant les informations entraîne des problèmes d'adhérence. Ce document prévoit une étape de nettoyage précédant la lamination et visant à supprimer les composés chimiques supposés nuire à l'adhérence des différentes couches entre elles. Néanmoins, cet article n'a pas été exploité en pratique.

Diverses autres tentatives ont été faites d'incorporer des motifs thermochromiques dans des cartes formées d'une pluralité de couches thermoplastiques laminées à chaud et sous pression. Or, les compositions d'encre thermochromique connues et envisagées notamment dans ces applications sont des compositions à solvant aqueux. EP2322587 décrit un exemple de composition d'encre thermochromique comprenant des microcapsules incorporant une composition thermochromique et des absorbeurs UV dispersées dans un solvant aqueux avec un liant polymérique, par exemple acrylique.

Par ailleurs, de nombreuses cartes formant des supports de données et utilisées à des fins d'identification ou de sécurité (cartes bancaires, cartes d'identité, permis de conduire, cartes d'accès individuel à des sites ou des transports en commun, feuille de passeport...) sont formées par lamination à chaud et sous pression d'une pluralité de couches en matériau thermoplastique -notamment en polycarbonate, matériau présentant par ailleurs de nombreux avantages dans ces applications (rigidité, durabilité, facilité et fiabilité des marquages (inscriptions variables, motifs de sécurité...), possibilité d'effectuer des marquages par laser...)-. Or, les inventeurs ont constaté que les compositions d'encre thermochromique à solvant aqueux proposées jusqu'à maintenant ne sont pas compatibles avec les procédés de fabrication par lamination à chaud de telles couches de matériau thermoplastique, et en particulier avec la lamination à chaud (température de l'ordre de 150°C à 200°C) et sous pression (de l'ordre de 2.10⁴ Pa) de couches de polycarbonate. En effet, ces conditions de lamination détruisent l'effet thermochromique procuré par les compositions d'encre thermochromique imprimées sur les couches de polycarbonate. En outre, on constate irrémédiablement des problèmes d'adhérence des couches polycarbonate entre elles et avec les compositions thermochromique imprimées. Également, les compositions d'encre thermochromique connues ont une durée de vie limitée au mieux à une ou deux années, ce qui est insuffisant dans les applications d'identification ou de sécurité pour lesquelles une durée de vie d'au moins 10 ans est requise (cf. notamment ISO 24789-1,2 (2012) - "Method of evaluation of identification (ID) card service life"). Le même problème se pose avec les papiers synthétiques et les papiers fiduciaires utilisés dans les applications de sécurité (authentification et/ou anti-falsification) et/ou d'identification qui sont souvent laminés à chaud et sous pression.

Il est à noter à ce titre que les compositions d'encres thermochromiques à durcissement sous irradiation par des ultraviolets ne sont pas non plus compatibles avec les procédés de lamination à chaud, l'activité thermochromique étant détruite sous l'action de la chaleur et/ou dans le temps, et procurent un effet thermochromique beaucoup moins réactif, insuffisant dans les applications susvisées dans lesquelles les composants thermochromique sont isolés thermiquement de l'extérieur par au moins une couche, notamment une couche de polycarbonate.

Par ailleurs le polycarbonate, les papiers synthétiques et les papiers fiduciaires sont sensibles à la plupart des solvants organiques et ne sont donc pas compatibles avec des impressions avec des encres à base de solvants organiques.

En conséquence, les propositions qui ont pu être faite d'incorporer des motifs thermochromiques dans les cartes laminées à chaud et sous pression -notamment en polycarbonate-, les papiers synthétiques et les papiers fiduciaires ne constituent à ce jour que des enseignements théoriques non réalisables en pratique à l'échelle industrielle ou commerciale, en particulier pour fabriquer des supports de données utilisables à des fins d'identification ou de sécurité.

L'invention vise donc à pallier ces inconvénients en proposant une composition d'encre thermochromique qui simultanément :
- soit compatible avec une lamination à chaud à une température supérieure à 150°C, typiquement de l'ordre de 180°C,
- puisse adhérer fortement sur une couche de matériau thermoplastique, notamment en polycarbonate, et/ou un papier synthétique et/ou sur un papier fiduciaire,
- ne nuise pas à l'adhésion des couches de matériau thermoplastique -notamment en polycarbonate- après leur lamination à chaud et sous pression,
- présente un effet thermochromique suffisamment réactif pour pouvoir être activable à travers l'épaisseur d'au moins une couche protectrice, notamment une couche en matériau thermoplastique -notamment en polycarbonate-, ou un film de sécurité ou une couche en papier synthétique ou en papier fiduciaire,
- présente un effet thermochromique persistant sur une durée supérieure à 10 ans,
- présente un effet thermochromique résistant à la lumière et aux variations et chocs de température et d'humidité.

Pour ce faire, l'invention concerne donc une composition selon la revendication 1.

L'invention concerne notamment une composition d'encre thermochromique comprenant dans un milieu liquide, dit solvant :
- une dispersion de microcapsules thermochromiques incorporant au moins un leuco-colorant, et
- un liant thermoplastique choisi dans le groupe formé des polyesters polyacryliques, des polyuréthanes, et de leurs copolymères.
caractérisée en ce que ledit solvant est aprotique.

Ledit solvant appartient donc au groupe des solvants aprotiques et est en particulier exempt d'eau et n'est pas un solvant aqueux. Il est à noter que le terme "solvant" est utilisé dans tout le texte pour désigner, à l'instar de la terminologie utilisée dans le domaine des compositions d'encre et de l'impression, le milieu liquide formant la base de la composition d'encre thermochromique selon l'invention, bien que ce milieu liquide ne constitue pas strictement un solvant au sens chimique du terme, les microcapsules thermochromique étant dispersées dans ce milieu liquide et non solubilisées dans ce dernier.

Les inventeurs ont constaté que l'utilisation d'un solvant aprotique dans une composition d'encre thermochromique selon l'invention permet d'obtenir des impressions thermochromiques qui sont ensuite compatibles avec une lamination à chaud et sous pression, qui présentent un effet thermochromique durable sur de nombreuses années et suffisamment réactif pour pouvoir est utilisé à travers au moins une épaisseur de matériau thermoplastique -notamment en polycarbonate-, qui présentent une excellente adhésion sur les matériaux thermoplastiques, plus particulièrement sur les matériaux thermoplastiques rigides à température ambiante -notamment sur le polycarbonate- et ne nuisent pas à l'adhérence de couches de tels matériaux plastiques -notamment en polycarbonate-lorsqu'elles sont interposées entre de telles couches. L'invention permet aussi d'obtenir des impressions thermochromiques qui sont ensuite compatibles avec les papiers synthétiques et les papiers fiduciaires. Aucune explication claire ne peut être donnée à ce phénomène surprenant constaté par les inventeurs. Il est cependant possible que le caractère aprotique du solvant, bien que ce dernier ne soit normalement plus présent lorsque que l'impression est durcie (le solvant ayant été évaporé), joue un rôle dans la résistance ultérieure des microcapsules thermochromiques à une lamination à chaud et sous pression et/ou dans le fonctionnement des leuco-colorants. Plus exactement, il est possible que le caractère protique des solvants aqueux utilisés jusqu'à maintenant dans les compositions d'encre thermochromique connues affecte considérablement la résistance ultérieure des microcapsules thermochromiques à une lamination à chaud et sous pression et/ou le fonctionnement des leuco-colorants.

Ledit solvant aprotique doit aussi être choisi pour être compatible avec les microcapsules et avec le liant, et pour être compatible avec la technique d'impression utilisée. Avantageusement et selon l'invention, le solvant aprotique est choisi dans le groupe des solvants des compositions imprimables par sérigraphie. Avantageusement et selon l'invention ledit solvant aprotique présente au moins l'une des caractéristiques suivantes :
- il est choisi dans le groupe des solvants aprotiques ayant un moment dipolaire compris entre 0 et 1,9 C.m,
- il est choisi dans le groupe des solvants aprotiques ayant une constante diélectrique (permittivité par rapport au vide) comprise entre 1,5 et 11,
- il est choisi dans le groupe des solvants polaires aprotiques,
- il comprend au moins un composé choisi dans le groupe formé des propanoates de n-alkyle et des propylènes de glycol (solvants particulièrement compatibles avec des microcapsules thermochromiques en mélamine formaldéhyde).

Plus particulièrement, dans un mode de réalisation avantageuse une composition d'encre thermochromique conforme à l'invention comprend à titre de solvant un composé choisi dans le groupe formé du propanoate de n-propyle, du propanoate de n-butyle, du propanoate de n-pentyle, de l'éthoxy-3-propanoate d'éthyle, de l'acétate de 1-méthoxy-2propyle, du 1-propoxy-2propanol, acétate de 1-propoxy-2-propyle, du 1-butoxy-2-propanol, du 1-(2-méthoxy-1-méthyléthoxy) 2-propanol, de l'acétate de 1-(2-méthoxy-1-méthyléthoxy) 2-propyle, du 1-(2-propoxy-1-méthyléthoxy) 2-propanol, et du [2-(2-méthoxy méthyléthoxy) méthyléthoxy] propanol. D'autres exemples sont possibles.

Par ailleurs, le liant thermoplastique est choisi en particulier en fonction du matériau servant de support d'impression pour la composition d'encre thermochromique selon l'invention. C'est un avantage de l'invention que de permettre résoudre les problèmes susmentionnés avec un grand nombre de supports d'impression pouvant être utilisés pour recevoir l'impression thermochromique. Ainsi une composition d'encre thermochromique selon l'invention peut être optimisée pour une impression sur un support choisi dans le groupe des matériaux thermoplastiques, des papiers synthétiques, et des papiers fiduciaires. Il est à noter à ce titre qu'une composition d'encre thermochromique selon l'invention peut être optimisée pour une impression sur un support sensible aux solvants tel que les supports en polycarbonate et les papiers fiduciaires.

Le liant thermoplastique d'une composition d'encre thermochromique selon l'invention peut aussi être optimisé pour une impression sur un support destiné à être laminé à chaud et sous pression (par exemple un laminat de couches thermoplastiques formant une carte de sécurité et/ou d'identification telle qu'une carte bancaire).

Le liant thermoplastique d'une composition d'encre thermochromique selon l'invention peut aussi être optimisé pour présenter une grande durée de vie, notamment de plusieurs années, par exemple d'au moins dix ans.

En particulier, à titre d'exemple, le liant thermoplastique d'une composition d'encre thermochromique selon l'invention peut être optimisé pour une impression sur un support en un matériau thermoplastique choisi dans le groupe constitué du polycarbonate, du PVC, et des polyesters (polytéréphtalate d'éthylène PET, PETG). D'autres exemples sont possibles.

Avantageusement une composition d'encre thermochromique selon l'invention plus particulièrement destinée à une impression sur un support en polycarbonate comprend à titre de liant une résine thermoplastique choisie dans le groupe formé des poly(méth)acrylates d'alkyle et de leurs copolymères.

En particulier, à titre d'exemple, le liant thermoplastique d'une composition d'encre thermochromique selon l'invention peut être optimisé pour une impression sur un support en papier synthétique choisi parmi le papier commercialisé sous la marque Teslin® par la société PPG, Monroeville, USA, le papier commercialisé sous la marque Neobond® par la société Neenah Lahnstein, Lahnstein, Allemagne, et le papier commercialisé sous la marque Polyart® par la société Arjobex, Boulogne, France. D'autres exemples sont possibles.

En particulier, à titre d'exemple, le liant thermoplastique d'une composition d'encre thermochromique selon l'invention peut être optimisé pour une impression sur un support en papier fiduciaire, tel qu'un papier de passeports, un papier de billet de banque, un papier de carte d'identité, un papier de permis de conduire, un papier de visa, un papier de certificat de naissance, un papier de sceaux douaniers,... D'autres exemples sont possibles.

Dans les applications de sécurité et/ou d'identification de l'invention, le liant thermoplastique d'une composition d'encre thermochromique selon l'invention peut également avantageusement être choisi de façon à révéler les tentatives de falsification aux solvants (attaque chimique), et en particulier un liant incorporant un agent soluble dans les solvants d'un adhésif (lorsque la composition d'encre thermochromique est utilisée pour imprimer un motif thermochromique sur une carte adhésive) comme décrit par exemple par EP 1109675.

Par ailleurs, un autre avantage d'une composition d'encre thermochromique selon l'invention est de permettre l'adjonction de différents additifs dans le solvant sans perturber le durcissement de la composition après impression.

En particulier, avantageusement une composition d'encre thermochromique selon l'invention comprend en outre au moins un additif anti-UV choisi dans le groupe formé des agents absorbeurs d'ultra-violets et des agents stabilisateurs de lumière (notamment de type HALS (« hindered amine light stabilizers »). Un tel agent absorbeur d'ultraviolets et/ou stabilisateur de lumière d'une composition d'encre thermochromique selon l'invention est incorporé au dit solvant aprotique, et est en particulier distinct des éventuels absorbeurs d'ultraviolets et/ou stabilisateurs de lumière incorporés aux microcapsules thermochromiques. Avantageusement une composition d'encre thermochromique selon l'invention comprend entre 1 % et 10 % -notamment entre 2 % et 5 %- en poids d'un additif anti-UV.

À titre d'additif anti-UV d'une composition d'encre thermochromique selon l'invention, on peut utiliser tout absorbeur d'ultraviolets et/ou stabilisateur de lumière compatible avec les autres constituants de la composition. À titre d'exemple, on peut citer le groupe des 2-(hydroxyphényl)-benzotriazoles (cf. notamment "Ultraviolet stabilizers of the 2-(hydroxyphenyl)benzotriazole class: influence of substituents on structure and spectra" J. Phys. Chem., 1992, 96 (25), pp 10225-10234) ; le groupe des 2-hydroxyphényl-s-triazines (cf. notamment US5096489) ; et le groupe des 2,2,6,6-tétraméthylpipéridines (TMP) (cf. notamment « oxidation inhibition inorganic materials » Jan Pospisil, Peter P. Klemchuk CRC Press, 1989). Avantageusement et selon l'invention, on peut choisir un absorbeur d'ultraviolets dans le groupe du 2-(2-hydroxyphényl)-benzotriazole (BTZ) et de la 2-hydroxyphényl-s-triazine (HDT).

Dans un mode de réalisation avantageux et conforme à l'invention, la composition d'encre thermochromique comprend dans ledit solvant entre 15 % et 35 % en poids de microcapsules thermochromiques, entre 30 % et 45 % en poids de liant thermoplastique, entre 1 % et 10 % en poids d'au moins un additif anti-UV.

L'invention s'étend à un procédé de fabrication d'une carte en matériau thermoplastique -notamment en polycarbonate- comprenant au moins une étape de lamination à chaud et sous pression d'une pluralité de couches en matériau thermoplastique -notamment en polycarbonate-,
caractérisé en ce que, avant l'au moins une étape de lamination à chaud et sous pression, on imprime sur au moins une couche en matériau thermoplastique -notamment en polycarbonate-, au moins un motif thermochromique avec une composition d'encre thermochromique selon l'invention.

Le motif thermochromique peut être quelconque : texte(s), dessin(s), ligne(s),... Il peut aussi s'agir d'un aplat (impression continue sur au moins une partie de surface d'une couche de la carte).

Avantageusement et selon l'invention au moins un motif thermochromique est imprimé avec une composition d'encre thermochromique selon l'invention de façon à être interposé entre une couche de surface de la carte et une couche immédiatement sous-jacente à ladite couche de surface. Pour ce faire, au moins un motif thermochromique est imprimé avec une composition d'encre thermochromique selon l'invention sur une couche de surface de la carte, c'est-à-dire sur une couche de matériau thermoplastique -notamment en polycarbonate- dont une face constitue une face libre de la carte après lamination à chaud et sous pression. Un tel motif thermochromique est avantageusement imprimé sur une face de ladite couche de surface opposée à la face de la couche constituant la face libre externe de la carte. En variante ou en combinaison, au moins un motif thermochromique est imprimé avec une composition d'encre thermochromique selon l'invention sur une couche immédiatement sous-jacente à une couche de surface de la carte, notamment sur une face de cette couche sous-jacente venant au contact de ladite couche de surface après lamination à chaud et sous pression.

L'invention s'étend à une carte comprenant une pluralité de couches superposées en au moins un matériau thermoplastique -notamment en polycarbonate- comprenant au moins un motif thermochromique formé par impression d'une composition d'encre selon l'invention.

L'invention concerne également une composition d'encre thermochromique, un procédé de fabrication d'une carte et une carte caractérisés en combinaison par tout ou partie des caractéristiques mentionnées ci-dessus ou ci-après.

D'autres buts, caractéristiques et avantages de l'invention apparaîtront à la lecture des exemples qui suivent.

### EXEMPLE 1 : fabrication d'une composition d'encre thermochromique

Une composition d'encre thermochromique est fabriquée en dispersant 20% en poids de microcapsules thermochromiques dans un mélange liquide formé d'un solvant polaire aprotique et d'une résine thermoplastique.

La composition d'encre thermochromique comprend :
- 20 % en poids de pigments (microcapsules) thermochromiques,
- 40 % en poids de copolymère de méthacrylate de méthyle à titre de liant transparent,
- 26 % en poids de 1-(2-méthoxy-1-méthyléthoxy) 2-propanol,
- 10 % de éthoxy-3-propanoate d'éthyle,
- 4 % en poids de 2-hydroxyphényl-s-triazine (absorbeur d'ultraviolets).

Les microcapsules thermochromiques sont des_microcapsules commercialisées sous la marque CHAMELEON® par la société Polychrom Co LTD, Ansan City, Corée.

L'absorbeur d'ultraviolets est commercialisé sous la référence TINUVIN® 400 par la société BASF, Ludwigshafen, Allemagne.

Cette encre présente une viscosité de 7.0 Pa.s +/- 1 Pa.s

L'encre peut s'imprimer avec des écrans de sérigraphie de 120 fils/cm permettant des impressions fines type trame de 80 dpi.

### EXEMPLE 2 : fabrication d'une carte en polycarbonate incorporant des impressions thermochromiques

Une composition d'encre obtenue conformément à l'exemple 1 est imprimée sous forme d'un aplat sur l'une des faces de deux feuilles de polycarbonate transparent dont l'épaisseur est de l'ordre de 50 µm.

L'encre est séchée par air chaud.

Les feuilles de polycarbonate imprimées sont associées avec cinq autres feuilles de polycarbonate interposées entre les feuilles de polycarbonate imprimées de façon à former un empilement, les faces imprimées étant placées au contact des feuilles sous-jacentes de l'empilement, c'est-à-dire ne constituant pas les faces extérieures de ce dernier. Les cinq feuilles de polycarbonate formant, avec les deux feuilles imprimées, ledit empilement sont successivement les suivantes : une feuille de 100 µm de polycarbonate transparent ; une feuille de 200 µm de polycarbonate blanc ; une feuille de 200 µm de polycarbonate blanc ; une feuille de 200 µm de polycarbonate blanc ; une feuille de 100 µm de polycarbonate transparent.

L'ensemble des feuilles formant cet empilement est laminé dans une presse de lamination dans les conditions suivantes :
- 1 min de montée à 180°C
- 12 min à 180°C sous 30N/cm²
- 5 min à 180°C sous 150 N/cm²
- refroidissement à 26°C pendant 17,5 min sous 180N/cm².

On obtient une carte dont l'épaisseur totale est égale à la somme des épaisseurs des feuilles de polycarbonate utilisées diminuée d'environ 10 %.

Les impressions thermochromiques réalisées avec la composition d'encre thermochromique selon l'invention se trouvent ainsi incorporées dans l'épaisseur de la carte.

### EXEMPLE 3 : tests d'adhérence et de durabilité

Des tests de durabilité sont effectués sur des cartes en polycarbonate telles que fabriquées conformément à l'exemple 2.

L'adhérence entre les différentes couches constitutives de la carte est évaluée selon différents protocole de test :
- mesure de pelage selon la norme ISO 10373 - 90° à 300mm/min,
- mesure de pelage après vieillissement climatique selon les normes ISO 24789-1 et 2,
- test de flexion selon les normes ISO 24789-1 et 2, 50 000 flexions dans la longueur, 50 000 flexions dans la largeur,
- test de flexion après vieillissement climatique selon les normes ISO 24789-1 et 2,
- test de flexion après exposition à la lumière artificielle selon les normes ISO 24789-1 et 2

La mesure de pelage montre que la force d'adhérence entre les couches est supérieure à 3,5 N/cm.

Dans les tests de flexion, aucune délamination n'apparaît au niveau des couches de polycarbonate environnant les impressions thermochromiques.

### EXEMPLE 4 : résistance à la lumière

La résistance à la lumière des cartes en polycarbonate telles que fabriquées conformément à l'exemple 2 est évaluée en mesurant l'écart de couleurs (DE* _{Lab}) des impressions thermochromiques avant et après exposition à la lumière artificielle. La mesure de la couleur s'effectue lorsque les impressions thermochromiques se trouvent dans leur premier état non activé c'est-à-dire dans la version colorée des microcapsules thermochromiques.

La mesure de l'écart de couleur s'effectue avec un spectro-colorimètre (Spectropen® (Dr. Lange, Düsseldorf, Germany)) selon la norme ISO 7724-3.

Les impressions thermochromiques sont exposées suivant trois protocoles de test :
- exposition aux UVA : 20h ; UVA 340 nm ; 60°C ; 0,72 W/m²/nm (norme ISO 4892),
- exposition à la lumière artificielle selon la norme OACI 3.2 -2006-paragraphe 5-14,
- exposition à la lumière arc xénon selon la norme ISO 24789-1 et 2.

L'écart de couleur DE est inférieur à 10 dans le cas d'une exposition aux UVA et inférieur à 5 dans le cas d'une exposition à la lumière artificielle de type arc xénon.

Avec des microcapsules thermochromiques réversibles colorées à l'état non activé et transparentes à l'état activé.

On constate que l'activité thermochromique des échantillons exposés en ce qui concerne la plage de température de décoloration et la plage de température recoloration est identique à celles des échantillons non exposés.

### EXEMPLE 5 : tenue climatique

La tenue climatique des cartes en polycarbonate telles que fabriquées conformément à l'exemple 2 est évaluée selon les protocoles de tests suivants :
- exposition à des cycles thermiques et à des conditions de stockage stressante selon la norme OACI 3.2-2006 paragraphe 5.2 ("thermal cycling method") et paragraphe 5.3 ("storage temperature stress method"),
- exposition à des températures et humidité élevées, choc thermique et cycle thermique selon la norme ISO 24789-1 et 2, paragraphe 5-7 ("temperature and humidity ageing"), paragraphe 5-8 ("temperature shock"), paragraphe 5-9 ("temperature and humidity cycling").

Pour les différents protocoles de test, il n'y a pas de perte de l'activité thermochromique, en termes de décoloration, de changement au niveau de la plage de décoloration et de la plage de recoloration.

## Revendications

1. Composition d'encre thermochromique comprenant dans un milieu liquide, dit solvant :
- une dispersion de microcapsules thermochromiques incorporant au moins un leuco-colorant, et
- un liant thermoplastique choisi dans le groupe formé des polyesters polyacryliques, des polyuréthanes, et de leurs copolymères,
**caractérisée en ce que** ledit solvant est aprotique et comprend au moins un composé choisi dans le groupe formé des propanoates de n-alkyle -notamment du propanoate de n-propyle, du propanoate de n-butyle, du propanoate de n-pentyle et du 3-éthoxypropanoate d'éthyle -, des propylènes de glycol, de l'acétate de 1-méthoxy-2-propyle, du 1-propoxy-2-propanol, acétate de 1-propoxy-2-propyle, du 1-butoxy-2-propanol, du 1-(2-méthoxy-1-méthyléthoxy) 2-propanol, de l'acétate de 1-(2-méthoxy-1-méthyléthoxy) 2- propyle, du 1-(2-propoxy-1-méthyléthoxy) 2-propanol, et du [2-(2-méthoxy méthyléthoxy) méthyléthoxy] 2-propanol.

2. Composition selon la revendication 1, **caractérisée en ce que** ledit solvant est choisi dans le groupe des solvants aprotiques ayant un moment dipolaire compris entre 0 et 1,9 C.m.

3. Composition selon l'une des revendications 1 ou 2, **caractérisée en ce que** ledit solvant est choisi dans le groupe des solvants aprotiques ayant une constante diélectrique comprise entre 1,5 et 11.

4. Composition selon l'une des revendications 1 à 3, **caractérisée en ce que** ledit solvant est choisi dans le groupe des solvants polaires aprotiques.

5. Composition selon l'une des revendications 1 à 4, **caractérisée en ce qu'**elle comprend des microcapsules thermochromiques en mélamine formaldéhyde.

6. Composition selon l'une des revendications 1 à 5, **caractérisée en ce qu'**elle comprend à titre de liant une résine thermoplastique choisie dans le groupe formé des poly(méth)acrylates d'alkyle et de leurs copolymères.

7. Composition selon l'une des revendications 1 à 6, **caractérisée en ce qu'**elle comprend en outre au moins un additif anti-UV choisi dans le groupe formé des agents absorbeurs d'ultra-violets et des agents stabilisateurs de lumière.

8. Composition selon l'une des revendications 1 à 7, **caractérisée en ce qu'**elle comprend entre 1 % et 10 % -notamment entre 2 % et 5 %-en poids d'un additif anti-UV.

9. Composition selon l'une des revendications 1 à 8, **caractérisée en ce qu'**elle comprend dans ledit solvant entre 5 % et 35 % en poids de microcapsules thermochromiques, entre 30 % et 45 % en poids de liant thermoplastique, entre 1 % et 10 % en poids d'au moins un additif anti-UV.

## Patentansprüche

1. Zusammensetzung aus thermochromer Tinte, umfassend, in einem flüssigen Medium, bezeichnet als Lösemittel:
- eine Dispersion von thermochromen Mikrokapseln, umfassend mindestens einen Leucofarbstoff, und
- ein thermoplastisches Bindemittel, ausgewählt aus der Gruppe, gebildet aus Polyacrylpolyestern, Polyurethanen und ihren Copolymeren,
**dadurch gekennzeichnet, dass** das Lösemittel aprotisch ist und mindestens eine Verbindung umfasst, ausgewählt aus der Gruppe, gebildet aus n-Alkylpropanoaten - insbesondere n-Propylpropanoat, n-Butylpropanoat, n-Pentylpropanoat und 3-Ethylethoxypropanoat -, Glykolpropylenen, 1-Methoxy-2-propylacetat, 1-Propoxy-2-propanol, 1-Propoxy-2-propylacetat, 1-Butoxy-2-propanol, 1-(2-Methoxy-1-methylethoxy) 2-propanol, 1-(2-Methoxy-1-methylethoxy) 2-propylacetat, 1-(2-Propoxy-1-methylethoxy) 2-propanol, und [2-(2-Methoxymethylethoxy) methylethoxy] 2-propanol.

2. Zusammensetzung nach Anspruch 1, **dadurch gekennzeichnet, dass** das Lösemittel ausgewählt ist aus der Gruppe von aprotischen Lösemitteln mit einem Dipolmoment zwischen 0 und 1,9 C.m.

3. Zusammensetzung nach einem der Ansprüche 1 oder 2, **dadurch gekennzeichnet, dass** das Lösemittel ausgewählt ist aus der Gruppe von aprotischen Lösemitteln mit einer dielektrischen Konstante zwischen 1,5 und 11.

4. Zusammensetzung nach einem der Ansprüche 1 bis 3, **dadurch gekennzeichnet, dass** das Lösemittel ausgewählt ist aus der Gruppe von polaren aprotischen Lösemitteln.

5. Zusammensetzung nach einem der Ansprüche 1 bis 4, **dadurch gekennzeichnet, dass** sie thermochrome Mikrokapseln aus Melamin-Formaldehyd umfasst.

6. Zusammensetzung nach einem der Ansprüche 1 bis 5, **dadurch gekennzeichnet, dass** sie als Bindemittel ein thermoplastisches Harz umfasst, ausgewählt aus der Gruppe, gebildet aus Alkylpoly(meth)acrylaten und ihren Copolymeren.

7. Zusammensetzung nach einem der Ansprüche 1 bis 6, **dadurch gekennzeichnet, dass** sie außerdem mindestens einen Anti-UV-Zusatzstoff umfasst, ausgewählt aus der Gruppe, gebildet aus Absorptionsmitteln von Ultravioletstrahlen und Lichtstabilisierungsmitteln.

8. Zusammensetzung nach einem der Ansprüche 1 bis 7, **dadurch gekennzeichnet, dass** sie zwischen 1 Gew% und 10 Gew% - insbesondere zwischen 2 Gew% und 5 Gew% - eines Anti-UV-Zusatzstoffs umfasst.

9. Zusammensetzung nach einem der Ansprüche 1 bis 8, **dadurch gekennzeichnet, dass** sie in dem Lösemittel zwischen 5 Gew% und 35 Gew% thermochrome Mikrokapseln, zwischen 30 Gew% und 45 Gew% thermoplastisches Bindemittel, zwischen 1 Gew% und 10 Gew% mindestens eines Anti-UV-Zusatzstoffs umfasst.

## Claims

1. Thermochromic ink composition comprising, in a liquid medium, known as solvent:
- a dispersion of thermochromic microcapsules incorporating at least one leuco-dye,and
- a thermoplastic binder selected from the group containing polyacrylic polyesters, polyurethanes and copolymers thereof,
**characterised in that** said solvent is aprotic and comprises at least one compound selected from the group containing n-alkyl propanoates -in particular n-propyl propanoate, n-butyl propanoate, n-pentyl propanoate and ethyl 3-ethoxypropanoate -, glycol propylenes, 1-methoxy-2-propyl acetate, 1-propoxy-2-propanol, 1-propoxy-2-propyl acetate, 1-butoxy-2-propanol, 1-(2-methoxy-1-methylethoxy) 2-propanol, 1-(2-methoxy-1-methylethoxy) 2-propyl acetate, 1-(2-propoxy-1-methylethoxy) 2-propanol, and [2-(2-methoxy methylethoxy) methylethoxy] 2-propanol.

2. Composition according to claim 1, **characterised in that** said solvent is selected from the group of aprotic solvents having a dipole moment between 0 and 1.9 C.m.

3. Composition according to one of claims 1 or 2, **characterised in that** said solvent is selected from the group of aprotic solvents having a dielectric constant between 1.5 and 11.

4. Composition according to one of claims 1 to 3, **characterised in that** said solvent is selected in the group containing aprotic polar solvents.

5. Composition according to one of claims 1 to 4, **characterised in that** it comprises thermochromic microcapsules made of melamine formaldehyde.

6. Composition according to one of claims 1 to 5, **characterised in that** it comprises as a binder a thermoplastic resin selected from the group containing alkyl poly(meth)acrylates and the copolymers thereof.

7. Composition according to one of claims 1 to 6, **characterised in that** it further comprises at least one anti-UV additive selected from the group containing ultra-violet absorbing agents and light stabilising agents.

8. Composition according to one of claims 1 to 7, **characterised in that** it comprises between 1% and 10% - in particular between 2% and 5% by weight of an anti-UV additive.

9. Composition according to one of claims 1 to 8, **characterised in that** it comprises in said solvent between 5% and 35% by weight of thermochromic microcapsules, between 30% and 45% by weight of thermoplastic binder, between 1% and 10% by weight of at least one anti-UV additive.
